# EUROPÄISCHE PATENTSCHRIFT

(11) **EP 3 857 196 B1**
(45) Veröffentlichungstag und Bekanntmachung des Hinweises auf die Patenterteilung: **19.10.2022**
(21) Anmeldenummer: 19755363.9
(22) Anmeldetag: 15.08.2019
(51) Int. Cl.: G01L 19/00, G01L 19/04

(54) **HYDRAULISCHER DRUCKMITTLER UND DRUCKAUFNEHMER MIT HYDRAULISCHEM DRUCKMITTLER**
HYDRAULIC DIAPHRAGM SEAL AND PRESSURE TRANSDUCER HAVING A HYDRAULIC DIAPHRAGM SEAL
TRANSMETTEUR DE PRESSION HYDRAULIQUE ET CAPTEUR DE PRESSION À TRANSMETTEUR DE PRESSION HYDRAULIQUE

(30) Priorität: 24.09.2018 DE 102018123433
(43) Veröffentlichungstag der Anmeldung: 04.08.2021
(73) Patentinhaber: Endress+Hauser SE+Co. KG, 79689 Maulburg (DE)
(72) Erfinder: DORIA, Patrick, 13407 Berlin (DE)
(74) Vertreter: Laufer, Michael
(86) Internationale Anmeldenummer: PCT/EP2019/071897
(87) Internationale Veröffentlichungsnummer: WO 2020/064213

(56) Entgegenhaltungen:
- EP-A1- 2 333 508
- DE-A1-102005 035 931

## Beschreibung

Die vorliegende Erfindung betrifft einen hydraulischen Druckmittler und einen Druckaufnehmer mit einem hydraulischen Druckmittler.

Hydraulische Druckmittler umfassen gewöhnlich einen Grundkörper, der eine Oberfläche aufweist, an dem eine Trennmembran mit zumindest zwei Schweißnähten druckdicht befestigt ist, so dass zwischen der Trennmembran und der Oberfläche eine Druckkammer gebildet wird, die über eine Öffnung in der Oberfläche des Grundkörpers mit einem hydraulischen Pfad kommuniziert.

Die Druckkammer und der hydraulische Pfad sind mit einer Übertragungsflüssigkeit gefüllt. Beispielsweise sind aus der EP 2 333 508 A1 ein Druckmittler mit Temperatursensor und aus der DE 10 2005 035931 A1 ein Druckmittler zum Übertragen des Drucks eines Prozessmediums bekannt geworden.

Zur Steuerung eines industriellen Prozesses ist in der Regel die Kenntnis der Prozesstemperatur unerlässlich. Beim Einsatz von hydraulischen Druckmittlern wird die Prozesstemperatur für gewöhnlich durch zwei verschiedene Möglichkeiten miterfasst. Bei der ersten Möglichkeit wird eine Widerstandsänderung eines Widerstandes in dem Druckwandler zur Bestimmung der Prozesstemperatur herangezogen, wohingegen bei der zweiten Möglichkeit ein zu dem Druckwandler separat ausgebildeter Temperaturwandler zur Bestimmung der Prozesstemperatur eingesetzt.

Beide Möglichkeiten weisen allerdings den Nachteil auf, dass eine Echtzeit (englisch "real-time") Temperaturerfassung, aufgrund der Trägheit der Übertragungsflüssigkeit nicht möglich ist.

Insoweit als temperaturabhängige Verformungen der Trennmembranen mit einem Trennmembranfehler bei der Druckmessung einhergehen, ist es für präzise Druckmessungen ebenfalls von grundsätzlichem Interesse, die Temperatur des Druckmittlers im Bereich der Druckkammer bzw. der Trennmembran und somit des Prozesses möglichst genau zu kennen. Die aus dem Stand der Technik bekannten Lösungen weisen einen Temperatursensor auf, der entweder neben der Trennmembran angeordnet ist, oder von hinten in den Grundkörper des Druckmittlers eingeführt ist, um die Temperatur des Grundkörpers in der Nähe der Druckkammer zu messen. Diese Sensorpositionen sind grundsätzlich fehlerbehaftet, denn die thermische Masse des Grundkörpers verhindert eine unverzügliche Anpassung der Grundkörpertemperatur an die Temperatur der Übertragungsflüssigkeit in der Druckkammer, die sich bei schnellen Änderungen der Medientemperatur und konvektivem Wärmetransport durch ein strömendes Medium sehr schnell ändern kann. Ein neben der Trennmembran angeordneter ggf. medienberührender Temperatursensor erfordert dagegen entweder eine zusätzliche Öffnung im Medienbehälter oder der medienführenden Leitung, durch welche der Temperatursensor eingesetzt werden kann, oder bei gegebener Trennmembranfläche muss der Radius des Grundkörpers um einen solchen Wert vergrößert werden, dass auf dem Rand des Grundkörpers noch Platz für die Montage eines Temperatursensors neben der Trennmembran vorhanden ist.

Sollte in anderen Messaufgaben neben dem Prozessdruck eine zweite Messgröße mit einem zweiten Sensor erfasst werden, stellt sich das gleiche konstruktive Problem. D.h. es muss wieder ein Montageplatz für den zweiten Sensor vorgesehen werden.

Es ist daher die Aufgabe der vorliegenden Erfindung, einen Druckmittler und einen Druckwandler mit einem Druckmittler bereit zu stellen, der die genannten Nachteile des Standes der Technik überwindet.

Die Aufgabe wird erfindungsgemäß gelöst durch den Druckmittler gemäß des unabhängigen Anspruchs 1 und des Druckwandlers gemäß des Anspruchs 9.

Der erfindungsgemäße Druckmittler zum Übertragen eines Drucks eines Prozessmediums umfasst:
einen Grundkörper, der eine Oberfläche aufweist;
und eine Trennmembran, die an der Oberfläche befestigt ist, wobei zwischen der Trennmembran und der Oberfläche eine Druckkammer gebildet wird, welche über eine Öffnung in der Oberfläche mit einem hydraulischen Pfad kommuniziert, die Trennmembran mit dem Prozessmedium von einer ersten Trennmembranseite beaufschlagbar ist, die Druckkammer und der hydraulische Pfad mit einer Übertragungsflüssigkeit gefüllt sind, um den Druck des Prozessmediums zu übertragen; die Trennmembran eine plattenförmige Membran mit einem umlaufenden Rand ist und die plattenförmige Membran über eine, vorzugsweise eine einzige umlaufende Schweißnaht druckdicht mit der Oberfläche des Grundkörpers verbunden ist und die Trennmembran einen zentralen Mittenbereich aufweist, wobei der Druckmittler weiterhin einen Temperatursensor zur Bestimmung einer Temperaturmessgröße des Prozessmediums umfasst, der im Mittenbereich an einer der ersten Trennmembranseite gegenüberliegenden zweiten Trennmembranseite der Trennmembran befestigt ist, und der Grundkörper in dem Mittenbereich mit der Trennmembran derartig verbunden ist, dass die Übertragungsflüssigkeit nicht in Kontakt mit dem Temperatursensor kommt.

Eine vorteilhafte Ausgestaltung des erfindungsgemäßen Druckmittlers sieht vor, dass der Temperatursensor im Mittenbereich an der zweiten Trennmembranseite mit der Trennmembran mittels einer wärmeleitfähigen Schicht verbunden ist. Die wärmeleitfähige Schicht kann bspw. durch einen wärmeleitfähigen Kleber, einen Weichlötverbindung oder eine wärmeleitfähige Paste gebildet sein. Der wärmeleitfähige Kleber weist vorzugsweise eine Wärmeleitfähigkeit im gehärteten Zustand von größer 0,1, bevorzugt größer 0,5 W/(m·K) auf. Die wärmeleitfähige Paste weist vorzugsweise eine Wärmeleitfähigkeit im Bereich von 0,8 bis 10 W/(m·K) auf. Eine Weichlötschicht weist vorzugsweise eine Wärmeleitfähigkeit von größer 50 W/mK auf.

Eine weitere vorteilhafte Ausgestaltung des erfindungsgemäßen Druckmittlers sieht vor, dass der Grundkörper eine durchgehende, zentrale Ausnehmung, insbesondere Bohrung aufweist, in welche der Temperatursensor von der medienabgewandten Rückseite des Grundkörpers eingesetzt ist. Insbesondere kann die Ausgestaltung vorsehen, dass ein Zwischenraum zwischen dem Temperatursensor und einer Wandung der zentralen Bohrung zumindest teilweise mit einem Wärmeisolationsmaterial, vorzugsweise einem anderen Wärmeisolationsmaterial als Luft, ausgekleidet ist.

Eine weitere vorteilhafte Ausgestaltung des erfindungsgemäßen Druckmittlers sieht vor, dass der Grundkörper in dem Mittenbereich mit der Trennmembran durch eine umlaufende Klebeverbindung verbunden ist, so dass die Übertragungsflüssigkeit nicht in Kontakt mit dem Temperatursensor kommt. Als Kleber für die Klebeverbindung wird vorzugsweise eine Epoxydkleber verwendet, der einen kleineren oder annäherungsweise gleichen thermischen Ausdehnungskoeffizienten wie der umgebende Grundkörper und/oder eine geringe Wechselwirkung mit der Übertragungsflüssigkeit aufweist.

Wiederum eine weitere vorteilhafte Ausgestaltung des erfindungsgemäßen Druckmittlers sieht vor, dass der Grundkörper und die Trennmembran (3) jeweils einen metallischen Werkstoff aufweisen.

Eine weitere vorteilhafte Ausgestaltung des erfindungsgemäßen Druckmittlers sieht vor, dass die Trennmembran zwischen einer den Mittenbereich begrenzenden Umlauflinie und dem umlaufenden Rand einen auslenkbaren Arbeitsbereich aufweist, und zwischen der Umlauflinie und dem umlaufenden Rand zumindest eine umlaufende Sicke vorgesehen ist.

Eine weitere vorteilhafte Ausgestaltung des erfindungsgemäßen Druckmittlers sieht vor, dass die umlaufende Klebeverbindung zwischen der den Mittenbereich begrenzenden Umlauflinie und der zentralen Ausnehmung, insbesondere Bohrung aufgebracht ist.

Der erfindungsgemäße Druckwandler umfasst einen erfindungsgemäßen Druckmittler und eine Druckmesszelle, die über den hydraulischen Pfad des Druckmittlers mit dem Druck des Prozessmediums beaufschlagbar ist, sowie eine elektronische Schaltung, um aus einem Primärsignal der Druckmesszelle ein aufbereitetes druckabhängiges Signal zu erzeugen.

In einer vorteilhaften Ausgestaltung des Druckwandlers ist vorgehsehen, dass die elektronische Schaltung Mittel zur Verarbeitung der Signale des Temperatursensors für die Temperaturmessgröße umfasst. Insbesondere kann die Ausgestaltung vorsehen, dass ein Signal des Temperatursensors am Eingang einer Korrekturschaltung zur Korrektur eines Temperaturfehlers des druckabhängigen Signals anliegt.

Eine weitere vorteilhafte Ausgestaltung des erfindungsgemäßen Druckwandlers sieht vor, dass der Druckwandler ein Absolutdruckwandler, ein Relativdruckwandler oder ein Differenzdruckwandler ist.

Die Erfindung wird anhand der nachfolgenden Zeichnungen näher erläutert. Es zeigt:
Fig. 1: einen Längsschnitt durch den erfindungsgemäßen Druckwandler, und
Fig. 2: ein Ausschnitt von einem Längsschnitt durch den erfindungsgemäßen Druckmittler, der Teil des Druckwandlers ist.

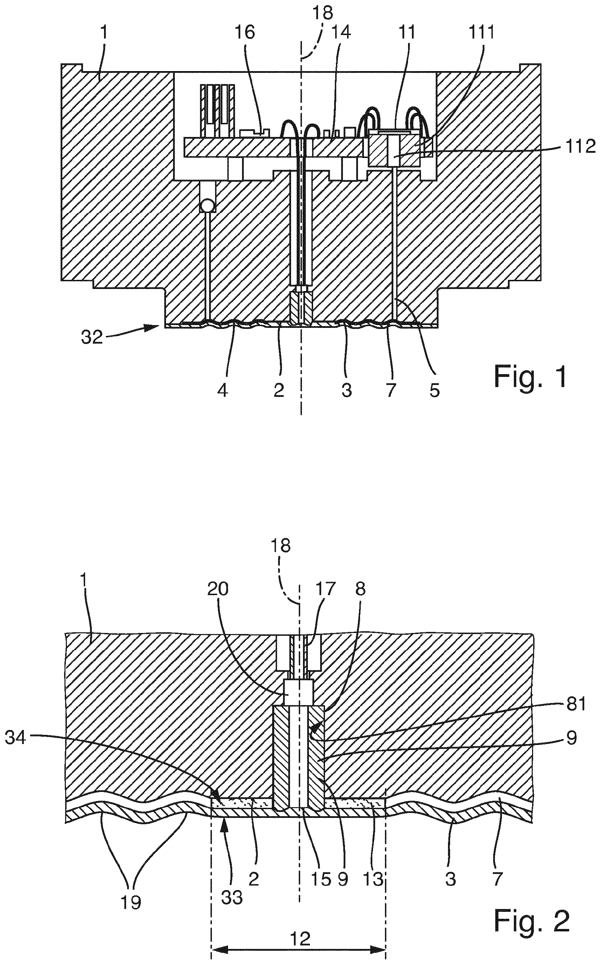

Der in Figur 1 dargestellte Druckwandler umfasst einen Grundkörper 1 mit einer Oberfläche 2, an der eine scheibenförmige Trennmembran 3 mit einer einzigen umlaufenden Schweißnaht an ihrem umlaufenden Außenrand 32 befestigt ist, wodurch sich zwischen dem Grundkörper und der Trennmembran 3 eine Druckkammer 4 bildet. Die Trennmembran 3 dieses Ausführungsbeispiels weist zwei umlaufende Sicken 19 auf. Von der Druckkammer 4 erstreckt sich eine Bohrung durch den Grundkörper 1, umso einen hydraulischen Pfad zu bilden und den Druck zu einem Druckempfänger zu übertragen. Damit der Druck auch entsprechend übertragen werden kann, ist die Druckkammer mit einer Übertragungsflüssigkeit 7, bspw. ein Öl, gefüllt.

Die bisher beschriebenen Komponenten betreffen mit anderen Worten ein Druckmittlermodul, welches mit einer Druckmesszelle kombiniert ist, um den erfindungsgemäßen Druckwandler zu bilden. Die Druckmesszelle umfasst einen Trägerkörper 111, an dem eine piezoresistives Druckmesselement 11 befestigt ist. Die Druckmesszelle kann als Relativ-, Differenzdruck- oder als Absolutdruckmesszelle ausgebildet sein. In der in Fig. 1 dargestellten Ausführungsform ist die Druckmesszelle als Relativdruckmesszelle ausgebildet. Hierbei wird über einen im Trägerkörper 111 integrierten Kanal 112, der mit der Bohrung durch den Grundkörper verbunden ist, die Druckmesszelle mit dem zu messenden Druck beaufschlagt. Insoweit dient die Druckmesszelle 11 als Druckempfänger des durch die Bohrung und den Kanal 112 realisierten hydraulischen Pfades.

Das Primärsignal der Druckmesszelle 11 wird zunächst von einer Schaltung auf einer Platine 14 vorverarbeitet, bevor es weiter aufbereitet und zur Kommunikation über die gängigen Protokolle, beispielsweise 4-20mA oder digitale Feldbusprotokolle aufbereitet wird.

Der erfindungsgemäße Druckwandler umfasst weiterhin einen Temperatursensor 20, der in einer zentralen Bohrung 8 durch den Grundkörper 1 des Druckmittlermoduls bis zur Rückseite, d.h. der prozessabgewandten Seite der Trennmembran, eingebracht ist, um die Temperatur des Prozessmediums zu erfassen. Eine zentrale Bohrung bedeutet hierbei ein Bohrung die sich entlang einer auf eine Außenkontur des Grundkörpers bezogene Rotationsachse erstreckt. Dadurch, dass der Temperatursensor 20 nicht in direkten Kontakt mit dem Prozessmedium steht, können Verschmutzung des Mediums durch den Temperatursensor 20, die Korrosion des Temperatursensors sowie eine Wechselwirkung zwischen dem Medium und dem Temperatursensor 20 ausgeschlossen werden, sodass sich ein derartiger Aufbau insbesondere für hygienische Anwendungen und/oder bei aggressiven Chemikalien eignet. Um schnelle Temperaturänderungen des Prozessmediums zuverlässig feststellen zu können, ist der Temperatursensor mit einem wärmeleitfähigen Kleber 15 an der Rückseite der Trennmembran 3 angeklebt, sodass eine gute thermische Kopplung gegeben ist. Vorzugsweise weist die Trennmembran eine sehr geringe Stärke im Bereich von ca. 20-60 µm auf, sodass durch den Temperatursensor 20 annäherungsweise Echtzeitschwankungen der Temperatur des Prozessmediums erfasst werden können. Um den Temperatursensor 20 von der Übertragungsflüssigkeit thermisch zu entkoppeln ist die Trennmembran 3 in einem Mittenbereich 12, welcher sich um die Rotationsachse 18 erstreckt, mit dem Grundköper verbunden. Dies kann beispielsweise durch eine umlaufende Klebeschicht bzw. Klebeverbindung 13 mittels eines speziellen Klebers, der eine geringere Wärmeleitfähigkeit als der wärmeleitfähige Kleber aufweist, erfolgen. Ferner kann um den Temperatursensor 20 auch von dem Grundkörper thermische zu entkoppeln, ein Wärmeisolationsmaterial 9 in einen Zwischenraum zwischen eine Bohrwandung 81 und dem Temperatursensor 20 eingebracht sein.

Das Primärsignal des Temperatursensors, beispielsweise ein PT1.000 Sensor, wird über elektrische Leitungen 17 der Platine 14 zugeführt um als Messsignal aufbereitet werden und gegebenenfalls zur Kompensation des Primärsignal des Drucksensors herangezogen zu werden.

### Bezugszeichenliste

- 1: Grundkörper
- 2: Oberfläche
- 3: Trennmembran
- 31: Umlauflinie
- 32: Umlaufender Rand
- 33: Erste Seite der Trennmembran
- 34: Zweite Seite der Trennmembran
- 4: Druckkammer
- 5: Hydraulischer Pfad
- 6: Öffnung
- 7: Übertragungsflüssigkeit
- 8: Bohrung
- 81: Wandung der Bohrung
- 9: Wärmeisolationsmaterial
- 10: Schweißnaht
- 11: Druckmesszelle
- 111: Trägerkörper
- 112: Kanal
- 12: Mittenbereich
- 13: Umlaufende Klebeverbindung
- 14: Elektronische Schaltung
- 15: Wärmeleitfähiger Kleber
- 16: Korrekturschaltung
- 17: Elektrische Leitungen
- 18: Rotationsachse
- 19: Sicke
- 20: Temperatursensor

## Patentansprüche

1. Druckmittler zum Übertragen des Drucks eines Prozessmediums, umfassend:
einen Grundkörper (1), der eine Oberfläche (2) aufweist;
und eine Trennmembran (3), die an der Oberfläche (2) befestigt ist, wobei zwischen der Trennmembran und der Oberfläche eine Druckkammer (4) gebildet wird, welche über eine Öffnung (6) in der Oberfläche mit einem hydraulischen Pfad (5) kommuniziert, die Trennmembran (3) mit dem Prozessmedium von einer ersten Trennmembranseite (33) beaufschlagbar ist, die Druckkammer (4) und der hydraulische Pfad (5) mit einer Übertragungsflüssigkeit (7) gefüllt sind, um den Druck des Prozessmediums zu übertragen; die Trennmembran (3) eine plattenförmige Membran mit einem umlaufenden Rand (32) ist und die plattenförmige Membran über eine,
vorzugsweise eine einzige umlaufende Schweißnaht (10) druckdicht mit der Oberfläche (2) des Grundkörpers (1) verbunden ist und die Trennmembran (3) einen zentralen Mittenbereich (12) aufweist, wobei der Druckmittler weiterhin einen Temperatursensor (20) zur Bestimmung einer Temperaturmessgröße des Prozessmediums umfasst, der im Mittenbereich (12) an einer der ersten Trennmembranseite (33) gegenüberliegenden zweiten Trennmembranseite (34) der Trennmembran (3) befestigt ist,
**dadurch gekennzeichnet, dass**
der Grundkörper (1) in dem Mittenbereich (12) mit der Trennmembran (3) derartig verbunden ist, dass die Übertragungsflüssigkeit (7) nicht in Kontakt mit dem Temperatursensor (20) kommt.

2. Druckmittler nach Anspruch 1, wobei der Temperatursensor (20) im Mittenbereich an der zweiten Trennmembranseite mit der Trennmembran mittels einer wärmeleitfähigen Schicht (15), vorzugsweise eine wärmeleitfähige Kleberschicht, eine Weichlötverbindungsschicht oder eine wärmeleitfähige Pastenschicht, verbunden ist.

3. Druckmittler nach Anspruch 1 oder 2, wobei der Grundkörper (1) eine durchgehende, zentrale Ausnehmung, insbesondere Bohrung (8) aufweist, in welche der Temperatursensor (20) von der medienabgewandten Rückseite des Grundkörpers (1) eingesetzt ist.

4. Druckmittler nach dem vorhergehenden Anspruch, wobei ein Zwischenraum zwischen dem Temperatursensor (20) und einer Wandung (81) der zentralen Bohrung (8) zumindest teilweise mit einem Wärmeisolationsmaterial (9), vorzugsweise einem anderen Wärmeisolationsmaterial als Luft, ausgekleidet ist.

5. Druckmittler nach einem der vorhergehenden Ansprüche, wobei der Grundkörper in dem Mittenbereich mit der Trennmembran durch eine umlaufende Klebeverbindung verbunden ist, so dass die Übertragungsflüssigkeit (7) nicht in Kontakt mit dem Temperatursensor (20) kommt.

6. Druckmittler nach einem der vorhergehenden Ansprüche, wobei der Grundkörper (1) und die Trennmembran (3) jeweils einen metallischen Werkstoff aufweisen.

7. Druckmittler nach einem der vorhergehenden Ansprüche, wobei die Trennmembran zwischen einer den Mittenbereich begrenzenden Umlauflinie (31) und dem umlaufenden Rand (32) einen auslenkbaren Arbeitsbereich aufweist, und zwischen der Umlauflinie (31) und dem umlaufenden Rand (32) zumindest eine umlaufende Sicke (19) vorgesehen ist.

8. Druckmittler nach Anspruch 3, 5 und 7, wobei die umlaufende Klebeverbindung zwischen der den Mittenbereich begrenzenden Umlauflinie (31) und der zentralen Ausnehmung, insbesondere Bohrung (8) aufgebracht ist.

9. Druckwandler, umfassend:
einen Druckmittler gemäß einem der Ansprüche 1 bis 8 und eine Druckmesszelle (11), die über den hydraulischen Pfad des Druckmittlers mit dem Druck des Prozessmediums beaufschlagbar ist, sowie eine elektronische Schaltung (14), um aus einem Primärsignal der Druckmesszelle (11) ein aufbereitetes druckabhängiges Signal zu erzeugen.

10. Druckwandler nach Anspruch 9, wobei die elektronische Schaltung (14) Mittel zur Verarbeitung der Signale des Temperatursensors (20) für die Temperaturmessgröße umfasst.

11. Druckwandler nach Anspruch 10, wobei ein Signal des Temperatursensors am Eingang einer Korrekturschaltung (16) zur Korrektur eines Temperaturfehlers des druckabhängigen Signals anliegt.

12. Druckwandler nach einem der Ansprüche 9 bis 11, wobei der Druckwandler ein Absolutdruckwandler, ein Relativdruckwandler oder ein Differenzdruckwandler ist.

## Claims

1. Diaphragm seal designed to transmit the pressure of a process medium, said diaphragm seal comprising:
a meter body (1), which has a surface (2);
and a process membrane (3) which is attached to the surface (2), wherein a pressure chamber (4) is formed between the process membrane and the surface, which communicates with a hydraulic path (5) via an opening (6) in the surface,
wherein the process membrane (3) can be exposed to a process medium from a first side of the process membrane (33), wherein the pressure chamber (4) and the hydraulic path (5) are filled with a transmission liquid (7) for the purpose of transferring the pressure of the process medium; wherein the process membrane (3) is a plate-shaped membrane with a circumferential edge (32) and the plate-shaped membrane is connected in a pressure-tight manner to the surface (2) of the meter body (1) via a circumferential welding seam (10), preferably only one,
and wherein the process membrane (3) has a central area (12), wherein the diaphragm seal further comprises a temperature sensor (20) for determining a temperature measured variable of the process medium, which is attached in a central area (12) to a second side (34) of the process membrane (3) opposite the first side (33) of the process membrane,
**characterized in that**
the meter body (1) is connected to the process membrane (3) in the central area (12) in such a way that the transmission liquid (7) does not come into contact with the temperature sensor (20).

2. Diaphragm seal as claimed in Claim 1, wherein the temperature sensor (20) is connected to the process membrane in the central area at the second process membrane side by means of a thermally conductive layer (15), preferably a thermally conductive glue layer, a soft solder connecting layer or a thermally conductive paste layer.

3. Diaphragm seal as claimed in Claim 1 or 2, wherein the meter body (1) has a continuous central recess, particularly a bore (8), in which the temperature sensor (20) is inserted from the rear side of the meter body (1) facing away from the medium.

4. Diaphragm seal as claimed in the previous claim, wherein an intermediate space between the temperature sensor (20) and a wall (81) of the central bore (8) is at least partially lined with a thermal insulation material (9), preferably a thermal insulation material other than air.

5. Diaphragm seal as claimed in one of the previous claims, wherein the meter body is connected to the process membrane in the central area by a circumferential adhesive connection such that the transmission liquid (7) does not come into contact with the temperature sensor (20).

6. Diaphragm seal as claimed in one of the previous claims, wherein the meter body (1) and the process membrane (3) each feature a metal material.

7. Diaphragm seal as claimed in one of the previous claims, wherein the process membrane has a working area, which can be deflected, between a circumferential line (31) delimiting the central area and the circumferential edge (32), and at least one circumferential rib (19) is provided between the circumferential line (31) and the circumferential edge (32).

8. Diaphragm seal as claimed in Claim 3, 5 and 7, wherein the circumferential adhesive connection is applied between the circumferential line (31) delimiting the central area and the central recess, particularly the bore (8).

9. Pressure transducer, comprising:
a diaphragm seal as claimed in one of the Claims 1 to 8 and a pressure measuring cell (11) which can be exposed to the pressure of the process medium via the hydraulic path of the diaphragm seal, and an electronic circuit (14) in order to generate a processed pressure-dependent signal from a primary signal of the pressure measuring cell (11).

10. Pressure transducer as claimed in Claim 9, wherein the electronic circuit (14) comprises means to process the signals of the temperature sensor (20) for the temperature measured variable.

11. Pressure transducer as claimed in Claim 10, wherein a signal of the temperature sensor is applied at the input of a correction circuit (16) to correct a temperature error of a pressure-dependent signal.

12. Pressure transducer as claimed in one of the Claims 9 to 11, wherein the pressure sensor is an absolute pressure transducer, a relative pressure transducer or a differential pressure transducer.

## Revendications

1. Séparateur destiné à transmettre la pression d'un produit de process, lequel séparateur comprend :
un corps de base (1), qui présente une surface (2) ;
et une membrane de séparation (3) qui est fixée à la surface (2), une chambre de pression (4) étant formée entre la membrane de séparation et la surface, laquelle communique avec un chemin hydraulique (5) par le biais d'une ouverture (6) dans la surface, la membrane de séparation (3) pouvant être alimentée en produit de process par un premier côté de la membrane de séparation (33), la chambre de pression (4) et le chemin hydraulique (5) étant remplis d'un liquide de transmission (7) afin de transférer la pression du produit de process ; la membrane de séparation (3) étant une membrane en forme de plaque avec un bord périphérique (32) et la membrane en forme de plaque étant reliée de manière étanche à la pression à la surface (2) du corps de base (1) par un, de préférence un unique, cordon de soudure périphérique (10) et la membrane de séparation (3) présentant une zone centrale (12), le séparateur de pression comprenant en outre un capteur de température (20) destiné à déterminer une grandeur de mesure de température du produit de process, lequel capteur est fixé dans la zone centrale (12) sur un deuxième côté (34) de la membrane de séparation (3) opposé au premier côté (33) de la membrane de séparation,
**caractérisé en ce que**
le corps de base (1) est relié à la membrane de séparation (3) dans la zone centrale (12), de telle sorte que le liquide de transmission (7) n'entre pas en contact avec le capteur de température (20).

2. Séparateur selon la revendication 1, pour lequel le capteur de température (20) est relié à la membrane de séparation dans la zone centrale sur le deuxième côté de la membrane de séparation au moyen d'une couche thermoconductrice (15), de préférence une couche de colle thermoconductrice, une couche de liaison par brasage tendre ou une couche de pâte thermoconductrice.

3. Séparateur selon la revendication 1 ou 2, pour lequel le corps de base (1) présente un évidement central continu, notamment un perçage (8), dans lequel le capteur de température (20) est inséré depuis le côté arrière du corps de base (1) opposé au produit.

4. Séparateur selon la revendication précédente, pour lequel un espace intermédiaire entre le capteur de température (20) et une paroi (81) du perçage central (8) est au moins partiellement revêtu d'un matériau d'isolation thermique (9), de préférence un matériau d'isolation thermique autre que l'air.

5. Séparateur selon l'une des revendications précédentes, pour lequel le corps de base est relié à la membrane de séparation dans la zone centrale par une liaison adhésive périphérique, de sorte que le liquide de transmission (7) n'entre pas en contact avec le capteur de température (20).

6. Séparateur selon l'une des revendications précédentes, pour lequel le corps de base (1) et la membrane de séparation (3) présentent chacun un matériau métallique.

7. Séparateur selon l'une des revendications précédentes, pour lequel la membrane de séparation présente une zone de travail pouvant être déviée entre une ligne périphérique (31) délimitant la zone centrale et le bord périphérique (32), et au moins une nervure périphérique (19) est prévue entre la ligne périphérique (31) et le bord périphérique (32).

8. Séparateur selon la revendication 3, 5 et 7, pour lequel la liaison adhésive périphérique est appliquée entre la ligne périphérique (31) délimitant la zone centrale et l'évidement central, notamment le perçage (8).

9. Capteur de pression, comprenant :
un séparateur selon l'une des revendications 1 à 8 et une cellule de mesure de pression (11) qui peut être alimentée en pression du produit de process par le biais de la voie hydraulique du séparateur, ainsi qu'un circuit électronique (14) destiné à générer un signal traité dépendant de la pression à partir d'un signal primaire de la cellule de mesure de pression (11).

10. Capteur de pression selon la revendication 9, pour lequel le circuit électronique (14) comprend des moyens de traitement des signaux du capteur de température (20) pour la grandeur de mesure de température.

11. Capteur de pression selon la revendication 10, pour lequel un signal du capteur de température est appliqué à l'entrée d'un circuit de correction (16) pour corriger une erreur de température du signal dépendant de la pression.

12. Capteur de pression selon l'une des revendications 9 à 11, pour lequel le capteur de pression est un capteur de pression absolue, un capteur de pression relative ou un capteur de pression différentielle.
